# EUROPEAN PATENT SPECIFICATION

(11) **EP 3 224 472 B1**
(45) Date of publication and mention of the grant of the patent: **30.06.2021**
(21) Application number: 15843058.7
(22) Date of filing: 25.11.2015
(51) Int. Cl.: F03D 5/00

(54) **WIND POWER GENERATION SYSTEM AND METHOD OF OPERATING THE SAME**
WINDENERGIEERZEUGUNGSSYSTEM UND VERFAHREN ZUM BETRIEB DAVON
SYSTÈME DE PRODUCTION D'ÉNERGIE ÉOLIENNE ET SON PROCÉDÉ DE FONCTIONNEMENT

(30) Priority: 26.11.2014 NL 2013876
(43) Date of publication of application: 04.10.2017
(73) Proprietor: E-Kite Holding B.V., 3771 AR Barneveld (NL)
(72) Inventor: VAN DEN BRINK, Alfred, 3771 RN Barneveld (NL)
(74) Representative: Nederlandsch Octrooibureau
(86) International application number: PCT/NL2015/050824
(87) International publication number: WO 2016/085337

(56) References cited:
- WO-A1-2014/018424
- WO-A2-2013/147600
- None

## Description

### Field of the invention

The present invention relates to a wind power generation system comprising a generator and a kite assembly connected thereto for generating electric power.

In a further aspect the present invention relates to a method of operating such a wind power generation system.

### Background

A wind power generation system is known from international patent publication WO2013/147600 of the same applicant, which uses a direct drive generator, winch pulleys and at least two cables to control the flight path of a kite assembly.

### Summary of the invention

The present invention seeks to provide further improvements in kite assemblies for use in kite based wind power generations systems, seeking better efficiency and reliability of the entire system or parts thereof. Today's available kite designs face several difficulties for application in kite based wind power generation systems. The kite structural design needs to meet for example demanding wing load and longevity requirements. Needed structural re-enforcements impact weight and consequently launch ability of the kite at low wind speed. The present invention seeks to improve both the launch and retrieval operation of the kite assembly.

According to a first aspect of the invention, the wind power generation system comprises a ground control unit with a generator, a kite assembly connected to the generator via one or more (e.g. two) main traction cables, and a launch and retrieve system. The launch and retrieve system comprises a first kite support frame provided with guide apertures for the one or more main traction cables, and a second kite support frame provided with guide apertures for the one or more main traction cables, wherein the second kite support frame comprises a propulsion system for positioning the second kite support frame in combination with the kite assembly in a position remote from the first kite support frame. The propulsion system comprises a plurality of propellers attached to the second kite support frame. Due to the structure using a second kite support frame, the launch and retrieval of the kite assembly can be optimized in terms of reliability, ease of operation and efficiency.

In a further aspect the present invention relates to a method of operating the wind power generation system. According to this aspect of the invention, the method comprises positioning the combination of the first kite support frame and the second kite support frame in a substantially horizontal position; positioning the second kite support frame to a launch altitude remote from the first kite support frame; allowing the kite assembly to fly by extending one or more main traction cables.

### Description of the drawings

The invention will be further elucidated referring to the schematic drawings attached wherein
Figure 1a shows a three dimensional schematic view of a first embodiment of a wind power generation system according to the present invention;
Figure 2 shows a three dimensional view of a kite assembly embodiment according to the present invention;
Figure 3 shows a perspective view of an example of a second kite support frame as used in the present invention embodiments during release from a first kite support frame;
Figure 4a shows a perspective view of a wind power generation system according to a present invention embodiment prior to launch of the kite assembly and second kite support frame from the first kite support frame;
Figure 4b shows a perspective view of a wind power generation system according to a present invention embodiment prior to launch of the kite assembly from the second kite support frame; and
Figure 4c shows a perspective view of a wind power generation system according to a present invention embodiment during generation of electrical power.

### Detailed description of embodiments

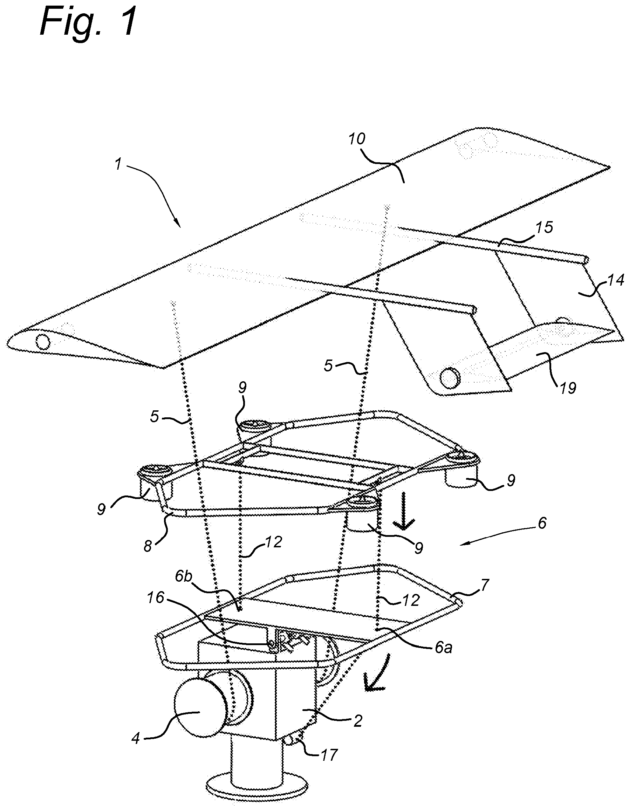

Figure 1a shows a three dimensional schematic view of a first embodiment of a wind power generation system according to the present invention comprising a ground control unit 2 with a generator 3 (inside the control unit 2, not shown in Figure 1, but connected mechanically to two winch pulleys 4), a kite assembly 10 connected to the generator 3 via the two winch pulleys and at least two main traction cables 5, and a launch and retrieve system 6.

In a further alternative embodiment, the kite assembly 10 is connected to the generator 3 via only one main traction cable 5, i.e. the generator 3 may then still be positioned inside the control unit 2, but connected mechanically to a single winch pulley 4.

In more general words, a wind power generation system is provided in a first embodiment of the present invention, comprising a ground control unit 2 with a generator, a kite assembly 10 connected to the generator 3 via at least one main traction cable 5, and a launch and retrieve system 6, the launch and retrieve system 6 comprising a first kite support frame 7 provided with guide apertures 7a, 7b for each of the one or more main traction cables 5, and a second kite support frame 8 provided with guide apertures 8a, 8b for each of the one or more main traction cables 5, the second kite support frame 8 comprising a propulsion system 9 for positioning the second kite support frame 8 in combination with the kite assembly 10 in a position remote from the first kite support frame 7.

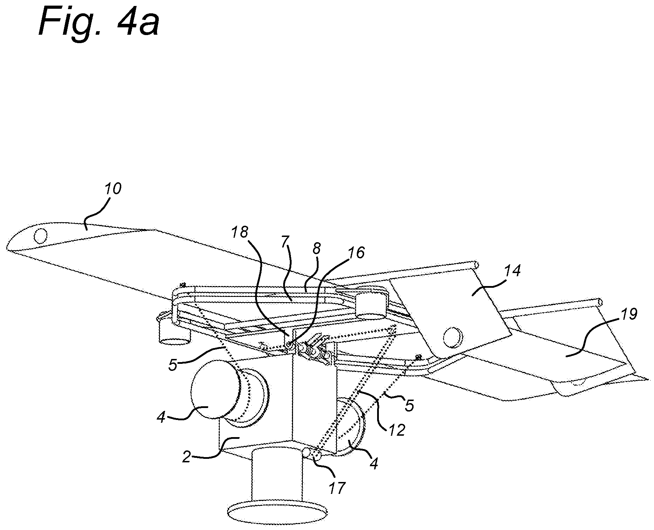

The launch and retrieve system 6 in the embodiment shown in Figure 1 comprises a first kite support frame 7 and a second kite support frame 8. The first kite support frame 7 is hingeably connected to the ground control unit 2 and is provided with guide apertures 7a, 7b for each of the main traction cables 5. An actuator is positioned between the ground control unit 2 and the first kite support frame 7 and used to put the first kite support frame 7 in a vertical orientation during normal operation or in a horizontal orientation during launch and retrieve operation (see also Figure 4a-c and description below). The second kite support frame 8 is comprising both a propulsion system 9 and a retraction winch system 17 for positioning the second kite support frame 8 in combination with the kite assembly 10 in a position remote from the first kite support frame 7. According to the invention, the propulsion system comprises a plurality of propellers 9 which are attached to the second kite support frame 8 to provide the needed vertical lift force for the second kite support frame 8 and kite assembly 10.

The plurality of propellers 9 are electrically driven in a further embodiment, e.g. using individual thrust control systems. Moreover, the second kite support frame 8 may comprise a stabilization system 9a in a further embodiment, e.g. an electronic gyroscopic sensor based control unit. This allows precise and optimum control of the second kite support frame 8 during launch and retrieve operations of the kite assembly 10.

The kite assembly 10 may further comprise an energy source, e.g. a (rechargeable) battery, which can supply operating power to one or more of the optionally present electrical components. E.g. the energy source may be used to drive the propellers 9, to power the stabilization system 9a, etc.

The retraction winch system 17 is used to control both the distance between the first kite support frame 7 and second kite support frame 8, and the mutual positioning thereof. The positioning and alignment of the kite assembly 10 in relation to the second kite support frame 8 during retrieve operation is achieved by guiding each of the one or more (e.g. two) main traction cables 5, including an optional support bridle below the kite assembly, through guide apertures 8a, 8b in the second kite control frame 8.

The positioning and alignment of the second kite support frame 8 in relation to the first kite support frame 7 during retrieve operation is achieved by firstly, guiding one or more (e.g. two) winch cables 12 through guide apertures 6a, 6b in the first kite control frame 7 or ground control unit 2 and secondly, by guiding each of the one or more (e.g. two) main traction cables 5 through guide apertures 7a, 7b in the first kite control frame 7. Thus, in a general embodiment, a wind power generation system is provided, wherein the launch and retrieve system 6 comprises a launch and retrieve winch 17 and guide apertures 6a, 6b for one or more cables 12 connected to the second kite support frame 8.

Furthermore, the cables 12 may be provided with electrical conductors, e.g. to provide electrical power and/or data communication from the ground control unit 2 to the second kite support frame 8. Similarly, also the main traction cables 5 may be provided with such electrical conductors in order to provide electrical power and/or control signals all the way up to the kite assembly 10.

In an alternative group of embodiments, the second kite support frame 8 is an integrated part of the kite assembly 10, and also remains part thereof during the actual power generation phase of flight of the kite assembly 10. The at least one cable 12 connecting the second kite support frame 8 to the launch and retrieve system 6 may then also be integrated in the at least one main traction cable 5. Furthermore, the launch and retrieve system 6 may then simply comprise an extending arm, operating in a vertical direction, in order to bring the kite assembly 10 (with integrated second kite support frame 8 and propulsion system 9) to a launch position (and vice versa as a last part of a retrieve operation).

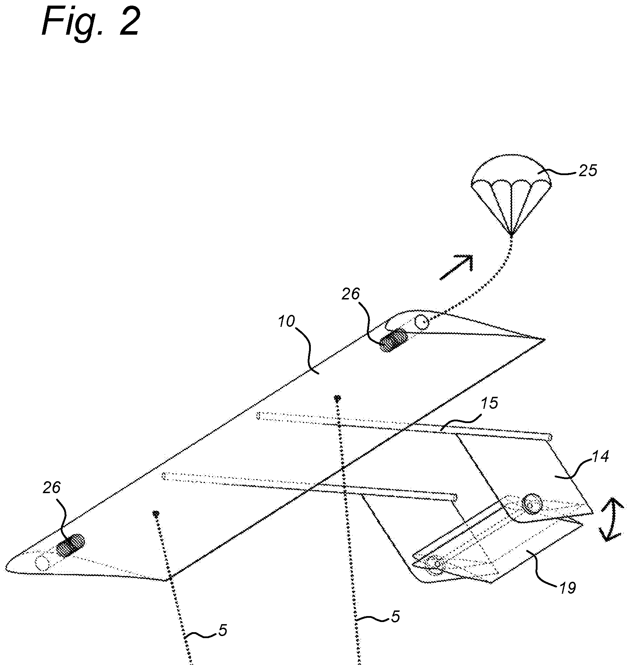

Figure 2 shows a three dimensional view of a kite assembly 10 embodiment according to the present invention, comprising a main wing or wing shaped body, such as an airfoil shaped body, provided with connection points for the main traction cables 5. The main traction cables 5 may be further operable to align and position the kite assembly 10 in relation and with respect to the first kite support frame 7 and the second kite support frame 8 while retrieving the kite assembly 10 towards the second kite support frame 8. In the embodiment shown, the kite assembly 10 comprises a kite tail 14, in particular embodiments a stabilizer tail 14, to be able to control the attitude of the kite assembly 10 along a pitch and yaw axis.

The kite tail or stabilizer tail 14 may be connected to the wing or wing shaped body via one or more booms 15 and may further comprise one or more vertical stabilizers and an adjustable horizontal stabilizer 19 for changing the angle of attack of the kite assembly 10.

According to another embodiment of the present invention, the kite tail or stabilizer tail 14 comprises an active control system for changing the angle of attack of the horizontal stabilizer 19 or a part thereof, e.g. one or more servo actuators with a ground station based remote radio-control unit. Moreover, the stabilizer tail 14 may comprise an active angle of attack control system 19, e.g. connected to an actuator with electronic controls and a ground station based control unit.

In an even further embodiment, the kite assembly 10 additionally or alternatively comprises an attitude control unit. The attitude control unit is e.g. a pitch control unit for controlling the pitch of the kite assembly 10, e.g. in the form of controlled ailerons. Alternatively, the attitude control unit co-operates with the propulsion system 9 (e.g. in quadracopter configuration) to control attitude of the kite assembly 10. This allows the kite assembly 10 to e.g. take one of two states during actual flight, a pitch up state for energy generation, and a pitch down state for a retrieve phase to an initial position.

In the embodiment shown, the kite assembly 10 may further comprises an emergency recovery system 25, which may be arranged to prevent the kite assembly 10 from moving erratically due to a loss of control as a result of a damaged or non-functional main wing body, kite/stabilizer tail 14, kite boom 15, and or main traction cable 5.

In an embodiment, the emergency recovery system 25 may be disposed at an end of the main wing body, or at both ends of the main wing body. In a practical embodiment the emergency recovery system 25 may comprise a safety parachute.

In a further embodiment a kite safety recovery system is provided as integral part of the main wind body or wing assembly, comprising one or more safety parachutes and an onboard activation system. This activation system is activated in emergency situations (e.g. loss of control, breaking traction cable) as safety measure to avoid high speed impact crashes of the kite assembly 10 and allows a low speed safety retrieve operation to the ground control unit. The kite safety recovery system may comprise the emergency recovery system 25 in further embodiments. The emergency recovery system may be operable by either a ground station or onboard safety electronics.

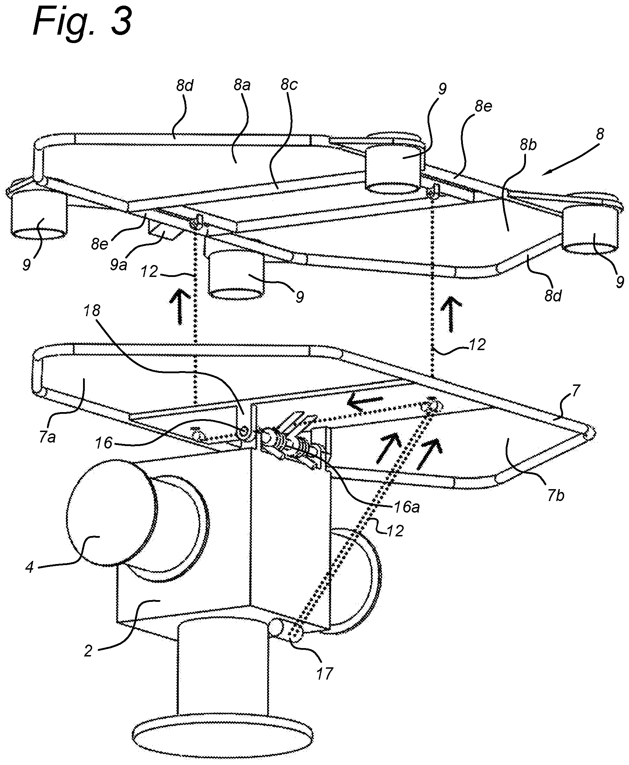

Figure 3 shows a perspective view of an embodiment of a launch and retrieve system 6, comprising a second kite support frame 8 being released from a first kite support frame 7. The second kite support frame 8 is provided with a lightweight frame structure, a plurality of propellers 9 with thrust/stabilization control, guide apertures 8a,8b for each of the one or more (two shown) main traction cables 5, an electronic control unit for thrust/ stabilization control and one or more connection points for the (winch) cables 12.

In an embodiment, the guide apertures 8a, 8b for each of the one or more main traction cables 5 in the second kite support frame 8 have a triangular shape to align the kite assembly 10 with respect to the second kite support frame 8 during retrieve operation. In an alternative embodiment, the guide apertures 8a, 8b for each of the one or more main traction cables 5 in the second kite support frame 8 have a circular shape.

In the embodiment, the first kite support frame 7 may be attached to the launch and retrieve system 6 by means of a hinge element 16, thereby enabling switching between a launch orientation and a power production orientation.

In advantageous embodiments, the hinge element 16 is displaced with respect to a center of gravity of the first kite support frame 7. That is, the hinge element 16 may be disposed away from a center of gravity of the first kite support frame 7 to enable a kite launch position thereof, e.g. a substantially horizontal position or orientation, by rotation about a hinge axis of the hinge element 16 due to gravity acting when the retrieve winch 17 partially or fully unwinds/unreels.

In a further embodiment, the kite launch position may also be achieved through a spring force, so wherein the hinge element 16 of the first kite support frame 7 is springloaded. This allows for an automatic positioning or orientation to the kite launch position, e.g. a substantially horizontal position or orientation, by rotating about the hinge axis of the hinge element 16 when the retrieve winch 17 partially or fully unwinds.

In a further aspect of the present invention, a method of operating the wind power generation system is provided.

Figure 4a shows a perspective view of an embodiment of wind power generation system 1 in a pre-launch configuration wherein the combination of the kite assembly 10 and the second kite support frame 8 is resting on the first kite support frame 7.

According to the present invention, the method of operating the wind power generation system 1 disclosed above comprises the step of a) positioning the combination of the first kite support frame 7 and the second kite support frame 8 in a substantially horizontal position. This method step is clearly depicted in the embodiment of Figure 4a, wherein the first kite support frame 7, the second kite support frame 8 and kite assembly 10 form a compact stacked arrangement disposed on the ground control unit 2.

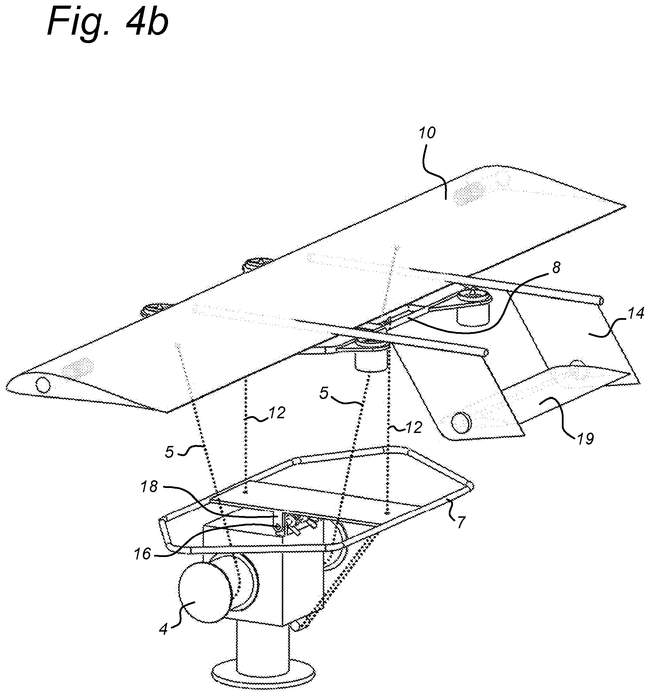

Figure 4b shows a perspective view of an embodiment of the wind power generation system 1 in a launch configuration of the kite assembly 10 and the second kite support frame 8 from the first kite support frame 7. Based on the embodiment shown, the method of the present invention further comprises the step of b) positioning the second kite support frame 8 to a launch altitude, remote from the first kite support frame 7. In this method step b) the kite assembly 10 and second kite support frame 8 form a stacked arrangement detached from the first kite support frame 7. The plurality of propellers 9 mounted on or attached to the second kite support frame 8 are arranged to controllably position the stacked arrangement of the second kite support frame 8 and the kite assembly 10 to the launch altitude at which the kite assembly 10 becomes operational for generating electrical power.

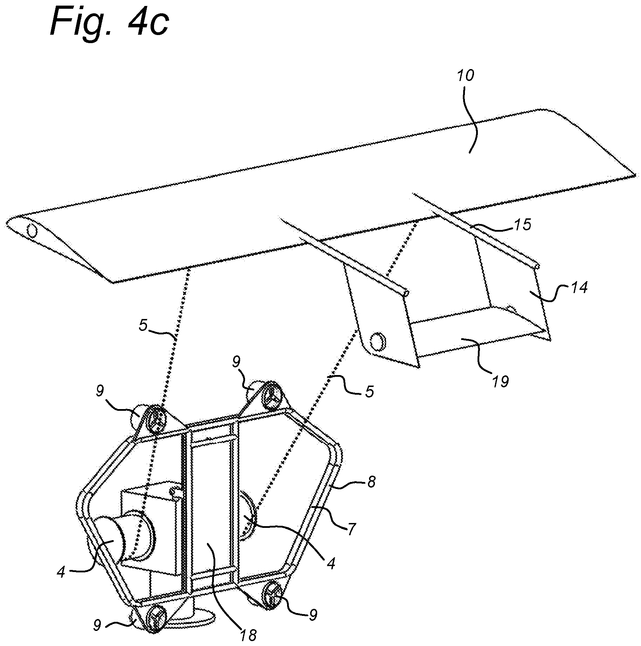

Figure 4c shows a perspective view of an embodiment of the wind power generation system 1 in a power generating configuration. Based on the embodiment shown, the method of the present invention further comprise the step of c) allowing the kite assembly 10 to fly by extending the one or more (two shown) main traction cables 5. In the power generating configuration, electrical power is generated by repeated retraction and extension of the one or more traction cables 5.

It is noted that in the further embodiment wherein the second kite support frame 8 is integrated as a part of the kite assembly 10, the power generation phase of flight is possible in the configuration as shown in Figure 4b.

In summary the method of the present invention thus comprises positioning the combination of the first kite support frame 7 and the second kite support frame 8 in a substantially horizontal orientation (e.g. a pre-launch configuration); positioning the second kite support frame 8 to a launch altitude remote from the first kite support frame 7 (e.g. launch configuration); and allowing the kite assembly 10 to fly by extending the one or more main traction cable 5 (e.g. power generating configuration).

It is noted that using the various control option embodiments described above, the power generation phase may include a figure eight flight path when two main traction cables 5 are present, or even a circular (or actually corkscrew) flight path when only one main traction cable 5 is present.

In the embodiment as shown in Figure 4c, the method may further comprise maneuvering the second kite support frame 8 back into position in line with the first kite support frame 7, and positioning the combination of first kite support frame 7 and second kite support frame 8 in a vertical or substantially vertical orientation. This allows free operation of the one or more main traction cables, winch pulleys and generator. In the embodiment shown, the second support frame 8 is fully retracted by the one or more cables 12 connected to the second kite support frame 8, wherein the first and second kite support frame 7, 8 form a stacked arrangement in a vertical or substantially vertical orientation.

According to the present invention, bringing the kite assembly 10 back to a pre-launch configuration is essentially achieved through performing the above method in reverse. To that end, in an embodiment the method may further comprise bringing the second kite support frame 8 to a kite retrieval position, and positioning the kite assembly 10 onto the second kite support frame 8 by retrieving, e.g. retracting, the one or more main traction cables 5 in a controlled manner. So in essence the second kite support frame 8 is separated from the first kite support frame 7 through the one or more propellers 9 to a launch altitude, which, depending on the actual altitude of the kite assembly 10, may be lower or higher than the launch altitude for bringing the kite assembly 10 in the power generating configuration. The kite assembly 1 is subsequently disposed onto the second kite support frame 8 by retraction of the one or more main traction cables 5.

The present invention embodiments have been described above with reference to a number of exemplary embodiments as shown in the drawings. Modifications and alternative implementations of some parts or elements are possible. The scope of protection is defined by the appended claims.

## Claims

1. Wind power generation system comprising a ground control unit (2) with a generator (3), a kite assembly (10) connected to the generator (3) via one or more main traction cables (5), and a launch and retrieve system (6),
the launch and retrieve system (6) comprising a first kite support frame (7) provided with guide apertures (7a, 7b) for each of the one or more main traction cables (5), and a second kite support frame (8) provided with guide apertures (8a, 8b) for each of the one or more main traction cables (5),
the second kite support frame (8) comprising a propulsion system (9) for positioning the second kite support frame (8) in combination with the kite assembly (10) in a position remote from the first kite support frame (7), **characterized in that** the propulsion system comprises a plurality of propellers (9) attached to the second kite support frame (8).

2. Wind power generation system according to claim 1, wherein the plurality of propellers (9) are electrically driven.

3. Wind power generation system according to claim 1 or 2, wherein the second kite support frame (8) comprises a stabilization system (9a), e.g. an electronic gyroscopic sensor based control unit.

4. Wind power generation system according to any one of claims 1-3, wherein the launch and retrieve system (6) comprises a launch and retrieve winch (17) and guide apertures (6a, 6b) for one or more cables (12) connected to the second kite support frame (8).

5. Wind power generation system according to any one of claims 1-4, wherein the first kite support frame (7) is attached to the launch and retrieve system (6) by means of a hinge element (16).

6. Wind power generation system according to any one of claims 1-5, wherein the launch and retrieve system (6) comprises an extending arm.

7. Wind power generation system according to any one of claims 1-6, wherein the guide apertures (8a, 8b) for each of the one or more main traction cables (5) in the second kite support frame (8) have a circular or triangular shape to align the kite assembly (10) with respect to the second kite support frame (8) during retrieve operation.

8. Wind power generation system according to any of claims 1-7, wherein the kite assembly (10) comprise a stabilizer tail (14).

9. Wind power generation system according to claim 8, wherein the stabilizer tail (14) comprises an active angle of attack control system (19), e.g. an actuator with electronic controls and a ground station based control unit.

10. Wind power generation system according to any one of claims 1-9, wherein the kite assembly (10) comprises an emergency recovery system, e.g. a safety parachute and operable by either ground station or on board safety electronics.

11. Wind power generation system according to any one of claims 1-10, wherein the second kite support frame (8) is an integrated part of the kite assembly (10).

12. Method of operating a wind power generation system according to any one of claims 1-11, comprising positioning the combination of the first kite support frame (7) and the second kite support frame (8) in a substantially horizontal position;
positioning the second kite support frame (8) to a launch altitude remote from the first kite support frame (7);
allowing the kite assembly (10) to fly by extending the one or more main traction cables (5).

13. Method according to claim 12, further comprising maneuvering the second kite support frame (8) back into position in line with the first kite support frame (7);
positioning the combination of the first kite support frame (7) and the second kite support frame (8) in a vertical orientation.

14. Method according to claim 12 or 13, further comprising bringing the second kite support frame (8) to a kite retrieval position, and
positioning the kite assembly (10) onto the second kite support frame (8) by retrieving the one or more main traction cables (5) in a controlled manner.

## Patentansprüche

1. Windenergieerzeugungssystem, welches eine Bodensteuereinheit (2) mit einem Generator (3), eine Drachenanordnung (10), die mit dem Generator (3) über ein oder mehrere Hauptzugkabel (5) verbunden ist, und ein Start- und Rückholsystem (6) umfasst,
wobei das Start- und Rückholsystem (6) einen ersten Drachentragrahmen (7), der mit Führungsöffnungen (7a, 7b) für jedes der einen oder mehreren Hauptzugkabel (5) versehen ist, und einen zweiten Drachentragrahmen (8) umfasst, der mit Führungsöffnungen (8a, 8b) für jedes der einen oder mehreren Hauptzugkabel (5) versehen ist,
wobei der zweite Drachentragrahmen (8) ein Antriebssystem (9) zum Positionieren des zweiten Drachentragrahmens (8) in Kombination mit der Drachenanordnung (10) in einer von dem ersten Drachentragrahmen (7) entfernten Position umfasst, **gekennzeichnet dadurch, dass** das Antriebssystem mehrere Propeller (9) umfasst, die an dem zweiten Drachentragrahmen (8) angebracht sind.

2. Windenergieerzeugungssystem nach Anspruch 1, wobei die mehreren Propeller (9) elektrisch angetrieben werden.

3. Windenergieerzeugungssystem nach Anspruch 1 oder 2, wobei der zweite Drachentragrahmen (8) ein Stabilisierungssystem (9a) umfasst, z.B. eine elektronische Steuereinheit auf der Basis eines gyroskopischen Sensors.

4. Windenergieerzeugungssystem nach einem der Ansprüche 1-3, wobei das Start- und Rückholsystem (6) eine Start- und Rückholwinde (17) und Führungsöffnungen (6a, 6b) für ein oder mehrere Kabel (12) umfasst, die mit dem zweiten Drachentragrahmen (8) verbunden sind.

5. Windenergieerzeugungssystem nach einem der Ansprüche 1-4, wobei der erste Drachentragrahmen (7) an dem Start- und Rückholsystem (6) mittels eines Gelenkelements (16) angebracht ist.

6. Windenergieerzeugungssystem nach einem der Ansprüche 1-5, wobei das Start- und Rückholsystem (6) einen ausfahrbaren Arm umfasst.

7. Windenergieerzeugungssystem nach einem der Ansprüche 1-6, wobei die Führungsöffnungen (8a, 8b) für jedes der einen oder mehreren Hauptzugkabel (5) in dem zweiten Drachentragrahmen (8) eine runde oder dreieckige Form haben, um die Drachenanordnung (10) in Bezug auf den zweiten Drachentragrahmen (8) während des Rückholvorgangs auszurichten.

8. Windenergieerzeugungssystem nach einem der Ansprüche 1-7, wobei die Drachenanordnung (10) ein Stabilisatorendstück (14) umfasst.

9. Windenergieerzeugungssystem nach Anspruch 8, wobei das Stabilisatorendstück (14) ein aktives Anstellwinkelsteuersystem (19) umfasst, z.B. einen Aktuator mit elektronischen Steuerungen und eine Bodenstationbasierte Steuereinheit.

10. Windenergieerzeugungssystem nach einem der Ansprüche 1-9, wobei die Drachenanordnung (10) ein Notfallwiederherstellungssystem, z.B. einen Sicherheitsfallschirm umfasst, das entweder von der Bodenstation oder der Sicherheitselektronik an Bord bedient werden kann.

11. Windenergieerzeugungssystem nach einem der Ansprüche 1-10, wobei der zweite Drachentragrahmen (8) ein integrierter Teil der Drachenanordnung (10) ist.

12. Verfahren zum Betreiben eines Windenergieerzeugungssystems nach einem der Ansprüche 1-11, welches das Positionieren der Kombination aus dem ersten Drachentragrahmen (7) und dem zweiten Drachentragrahmen (8) in einer im Wesentlichen waagerechten Position umfasst;
Positionieren des zweiten Drachentragrahmens (8) auf eine von dem ersten Drachentragrahmen (7) entfernte Starthöhe;
Ermöglichen, dass die Drachenanordnung (10) durch Ausfahren des einen oder der mehreren Hauptzugkabel (5) fliegt.

13. Verfahren nach Anspruch 12, welches ferner das Manövrieren des zweiten Drachentragrahmens (8) zurück in eine Position im Einklang mit dem ersten Drachentragrahmen (7) umfasst;
Positionieren der Kombination aus dem ersten Drachentragrahmen (7) und dem zweiten Drachentragrahmen (8) in einer senkrechten Ausrichtung.

14. Verfahren nach Anspruch 12 oder 13, welches ferner das Bringen des zweiten Drachentragrahmens (8) in eine Drachenrückholposition umfasst, und
Positionieren der Drachenanordnung (10) auf dem zweiten Drachentragrahmen (8) durch kontrolliertes Rückholen des einen oder der mehreren Hauptzugkabel (5).

## Revendications

1. Système de production d'énergie éolienne comprenant une unité de commande au sol (2) avec un générateur (3), un ensemble cerf-volant (10) relié au générateur (3) par l'intermédiaire d'un ou de plusieurs câbles de traction principaux (5), et un système de lancement et de récupération (6),
le système de lancement et de récupération (6) comprenant un premier cadre de support de cerf-volant (7) doté d'ouvertures de guidage (7a, 7b) pour chacun des un ou plusieurs câbles de traction principaux (5), et un deuxième cadre de support de cerf-volant (8) doté d'ouvertures de guidage (8a, 8b) pour chacun des un ou plusieurs câbles de traction principaux (5),
le deuxième cadre de support de cerf-volant (8) comprenant un système de propulsion (9) pour positionner le deuxième cadre de support de cerf-volant (8) en combinaison avec l'ensemble de cerf-volant (10) dans une position éloignée du premier cadre de support de cerf-volant (7), **caractérisé en ce que** le système de propulsion comprend une pluralité d'hélices (9) fixées au deuxième cadre de support de cerf-volant (8).

2. Système de production d'énergie éolienne selon la revendication 1, où la pluralité d'hélices (9) sont entraînées électriquement.

3. Système de production d'énergie éolienne selon la revendication 1 ou 2, où le deuxième cadre de support de cerf-volant (8) comprend un système de stabilisation (9a), par exemple une unité de commande basée sur un capteur gyroscopique électronique.

4. Système de production d'énergie éolienne selon l'une quelconque des revendications 1-3, où le système de lancement et de récupération (6) comprend un treuil de lancement et de récupération (17) et des ouvertures de guidage (6a, 6b) pour un ou plusieurs câbles (12) connectés au deuxième cadre de support de cerf-volant (8).

5. Système de production d'énergie éolienne selon l'une quelconque des revendications 1-4, où le premier cadre de support de cerf-volant (7) est fixé au système de lancement et de récupération (6) par l'intermédiaire d'un élément de charnière (16).

6. Système de production d'énergie éolienne selon l'une quelconque des revendications 1-5, où le système de lancement et de récupération (6) comprend un bras extensible.

7. Système de production d'énergie éolienne selon l'une quelconque des revendications 1-6, où les ouvertures de guidage (8a, 8b) pour chacun des un ou plusieurs câbles de traction principaux (5) dans le deuxième cadre de support de cerf-volant (8) ont une forme circulaire ou triangulaire pour aligner l'ensemble de cerf-volant (10) par rapport au deuxième cadre de support de cerf-volant (8) pendant l'opération de récupération.

8. Système de production d'énergie éolienne selon l'une quelconque des revendications 1-7, où l'ensemble de cerf-volant (10) comprend un empennage stabilisateur (14).

9. Système de production d'énergie éolienne selon la revendication 8, où l'empennage stabilisateur (14) comprend un système actif de commande d'angle d'attaque (19), par exemple un actionneur avec des commandes électroniques et une unité de commande basée sur une station au sol.

10. Système de production d'énergie éolienne selon l'une quelconque des revendications 1-9, où l'ensemble de cerf-volant (10) comprend un système de récupération d'urgence, par exemple un parachute de sécurité et pouvant être actionné par une station au sol ou par l'électronique de sécurité embarquée.

11. Système de production d'énergie éolienne selon l'une quelconque des revendications 1-10, où le deuxième cadre de support de cerf-volant (8) est une partie intégrée de l'ensemble de cerf-volant (10).

12. Procédé de fonctionnement d'un système de production d'énergie éolienne selon l'une quelconque des revendications 1-11, comprenant le positionnement de la combinaison du premier cadre de support de cerf-volant (7) et du deuxième cadre de support de cerf-volant (8) dans une position sensiblement horizontale ;
positionner le deuxième cadre de support de cerf-volant (8) à une altitude de lancement éloignée du premier cadre de support de cerf-volant (7) ;
permettre à l'ensemble de cerf-volant (10) de voler en prolongeant l'un ou plusieurs câbles de traction principaux (5).

13. Procédé selon la revendication 12, comprenant en outre la manœuvre du deuxième cadre de support de cerf-volant (8) en position alignée avec le premier cadre de support de cerf-volant (7) ;
positionner la combinaison du premier cadre de support de cerf-volant (7) et du deuxième cadre de support de cerf-volant (8) dans une orientation verticale.

14. Procédé selon la revendication 12 ou 13, comprenant en outre amener le deuxième cadre de support de cerf-volant (8) dans une position de récupération de cerf-volant, et
positionner l'ensemble de cerf-volant (10) sur le deuxième cadre de support de cerf-volant (8) en récupérant l'un ou plusieurs câbles de traction principaux (5) d'une manière contrôlée.
